# EUROPEAN PATENT APPLICATION

(11) **EP 4 760 598 A1**
(43) Date of publication of application: **17.06.2026**
(21) Application number: 24220271.1
(22) Date of filing: 16.12.2024
(51) Int. Cl.: G06N 3/0455, B60W 50/00, G06F 11/16

(54) **HARDWARE AND SOFTWARE ARCHITECTURE FOR AUTOMATED DRIVING SYSTEMS**

(71) Applicant: Zenseact AB, 417 56 Gothenburg (SE)
(72) Inventor: ROSÉN, ERIK, 441 43 Alingsås (SE); HEDBERG, Ognjan, 444 40 Stenungsund (SE); SILVLIN, Jonatan, 417 42 Göteborg (SE); PINGGERA, Peter, 81827 München (DE); LIEBEL, Lukas, 81671 München (DE); DIEZ, German, 81825 München (DE); LUTSKOV, Pavel, 81479 München (DE)
(74) Representative: Zacco Sweden AB

(57) **Abstract**

Computer-implemented methods and related aspects for generating predictive output for an Automated Driving System of a vehicle are disclosed. The computer-implemented method comprises, by one or more processors of a first hardware platform of the vehicle, encoding a first sensor dataset generated by a first cluster of sensors of the vehicle using one or more first encoder layers in order to form an encoded first sensor dataset. The method further comprises, by one or more processors of a second hardware platform of the vehicle, encoding a second sensor dataset generated by a second cluster of sensors of the vehicle using one or more second encoder layers in order to form an encoded second sensor dataset. The first and second hardware platforms are separate hardware platforms and wherein each sensor of the first cluster of sensors is different from the sensors of the second cluster of sensors. The computer implemented method further comprises, by one or more processors of the first hardware platform or by one or more processors of the second hardware platform of the vehicle, fusing at least a portion of the encoded first sensor dataset and at least a portion of the encoded second sensor dataset using one or more sensor fusion layers in order to form a set of fused encoded sensor data features, and generating a predictive output based on the set of fused encoded sensor data features using one or more decoder layers. The one or more first encoder layers, the one or more second encoder layers, the one or more sensor fusion layers, and the one or more decoder layers together form an end-to-end trained neural network.

## Description

### TECHNICAL FIELD

The disclosed technology relates to methods and systems for generating a predictive output for an Automated Driving System of a vehicle. In particular, but not exclusively the disclosed technology relates to hardware and software architectures for perception functionality within an Automated Driving System for improving availability and ensuring safety through redundancy in both software and hardware.

### BACKGROUND

Today, there is ongoing research and development within a number of technical areas associated to both the Advanced Driver Assistance System (ADAS) field and the Autonomous Driving (AD) field. ADAS and AD will herein be referred to under the common term Automated Driving System (ADS) corresponding to all of the different levels of automation as for example defined by the SAE J3016 levels (1 - 5) of driving automation, and in particular for level 4 and 5. ADS solutions have already found their way into a majority of the new cars on the market with only rising prospects of utilization in the not too distant future. An ADS may be construed as a complex combination of various components that can be defined as systems where perception, decision making, and operation of the vehicle are performed by electronics and machinery instead of or in tandem with a human driver, and as introduction of automation into road traffic. This includes handling of the vehicle, destination, as well as awareness of surroundings. While the automated system has control over the vehicle, it allows the human operator to leave all or at least some responsibilities to the system.

Automated driving systems rely on a combination of sensors, such as cameras, radar, lidar, and ultrasonic devices, to perceive and interpret the surrounding environment. These sensors capture various types of data, including object detection, distance measurement, and environmental mapping. Sensor fusion is the process of integrating data from multiple sensor types to enhance the accuracy, reliability, and robustness of the system's perception capabilities. By merging information from different sources, sensor fusion helps overcome the limitations of individual sensors, such as poor visibility or occlusion, and improves decision-making for ADS-operated vehicles. This technology is critical for achieving higher levels of autonomy, enabling safer and more efficient driving operations in diverse conditions.

Thus, there is an ever-present need for advancements in automated driving systems, particularly in optimizing sensor fusion algorithms to enhance real-time performance and ensure the safety of ADS-operated vehicles.

### SUMMARY

The herein disclosed technology seeks to mitigate, alleviate or eliminate one or more deficiencies and disadvantages in the prior art to address various problems relating to safety-critical redundancy is provided for perception and/or planning functionalities in Automated Driving Systems.

Various aspects and embodiments of the disclosed technology are defined below and in the accompanying independent and dependent claims.

A first aspect of the disclosed technology comprises a computer-implemented method for generating a predictive output for an Automated Driving System of a vehicle. The computer-implemented method comprises, by one or more processors of a first hardware platform of the vehicle, encoding a first sensor dataset generated by a first cluster of sensors of the vehicle using one or more first encoder layers in order to form an encoded first sensor dataset. The method further comprises, by one or more processors of a second hardware platform of the vehicle, encoding a second sensor dataset generated by a second cluster of sensors of the vehicle using one or more second encoder layers in order to form an encoded second sensor dataset. The first and second hardware platforms are separate hardware platforms and wherein each sensor of the first cluster of sensors is different from the sensors of the second cluster of sensors. The computer implemented method further comprises, by one or more processors of the first hardware platform or by one or more processors of the second hardware platform of the vehicle, fusing at least a portion of the encoded first sensor dataset and at least a portion of the encoded second sensor dataset using one or more sensor fusion layers in order to form a set of fused encoded sensor data features, and generating a predictive output based on the set of fused encoded sensor data features using one or more decoder layers. The one or more first encoder layers, the one or more second encoder layers, the one or more sensor fusion layers, and the one or more decoder layers together form an end-to-end trained neural network.

A second aspect of the disclosed technology comprises a computer program product comprising instructions which, when the program is executed by a computing device of a vehicle, causes the computing device to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device of a vehicle, causes the computing device to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for generating predictive output for an Automated Driving System of a vehicle. The system comprises a first hardware platform comprising a first cluster of sensors and one or more processors configured to encode a first sensor dataset generated by the first cluster of sensors of the vehicle using one or more first encoder layers in order to form an encoded first sensor dataset. The system further comprises a second hardware platform comprising a second cluster of sensors and one or more processors configured to encode a second sensor dataset generated by the second cluster of sensors of the vehicle using one or more second encoder layers in order to form an encoded second sensor dataset. The first and second hardware platforms are separate hardware platforms and wherein each sensor of the first cluster of sensors is different from the sensors of the second cluster of sensors. Moreover, the one or more processors of the first hardware platform or the one or more processors of the second hardware platform are further configured to fuse at least a portion of the encoded first sensor dataset and at least a portion of the encoded second sensor dataset using one or more sensor fusion layers in order to form a set of fused encoded sensor data features, and generate a predictive output based on the set of fused encoded sensor data features using one or more decoder layers. The one or more first encoder layers, the one or more second encoder layers, the one or more sensor fusion layers, and the one or more decoder layers together form an end-to-end trained neural network. With this aspect of the disclosed technology, similar advantages and preferred features are present as in the other aspects.

A fifth aspect of the disclosed technology comprises a vehicle comprising a system according to any one of the embodiments of the fourth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that safety-critical redundancy is provided for perception and/or planning functionalities of an ADS with reduced risk of information loss when information is exchanged between two separate computational platforms.

An advantage of some embodiments is that safety-critical redundancy is provided for perception and/or planning functionalities of an ADS so that the ADS is capable of generating reliable predictive outputs used for autonomously manoeuvring the vehicle even in situations where one of the computational platforms or software associated thereto fails.

An advantage of some embodiments is that improved performance and redundancy is provided for perception and/or planning functionalities of an ADS with reduced bandwidth need as compared to conventional solutions.

An advantage of some embodiments is that perception data can be shared between different computational platforms within a vehicle in a bandwidth efficient manner, thereby increasing the processing rate for generating the predictive outputs used for autonomously manoeuvring the vehicle in a safe manner.

An advantage of some embodiments is that safety-critical redundancy is provided for perception and/or planning functionalities of an ADS without limiting the available input to the perception and/or planning functionalities thereby avoiding a reduction in performance during times where the system is fully operational.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for generating a predictive output for an Automated Driving System of a vehicle in accordance with some embodiments.
Fig. 2a is a schematic block diagram representation of a system for generating a predictive output for an Automated Driving System of a vehicle in accordance with some embodiments.
Fig. 2b is a schematic block diagram representation of a system for generating a predictive output for an Automated Driving System of a vehicle in accordance with some embodiments.
Fig. 3a is a schematic block diagram representation of a system for generating a predictive output for an Automated Driving System of a vehicle in accordance with some embodiments.
Fig. 3b is a schematic block diagram representation of a system for generating a predictive output for an Automated Driving System of a vehicle in accordance with some embodiments.
Fig. 4 is a schematic block diagram representation depicting and end-to-end training setup of a system for generating a predictive output for an Automated Driving System of a vehicle in accordance with some embodiments.
Fig. 5 is a vehicle comprising a system for generating a predictive output for an Automated Driving System of a vehicle in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

Autonomous Driving Systems (ADSs) are safety-critical systems, implying that they should not have a single point of failure. In terms of the on-device embedded hardware ("HW"), on which the ADS software is executed, it is herein proposed to conform to this requirement of redundancy by having the ADS software executable on at least two separate compute units (or "hardware platforms"). In terms of the on-device sensors, this implies that the vehicle is equipped with a multitude of complementary sensors, and with separate clusters of sensors being connected to separate compute units. With this design, if one cluster of sensors and/or the corresponding compute unit has a hardware or software failure, then another cluster of sensors and the corresponding compute unit can still be used for manoeuvring the vehicle safely.

At the same time, to maximize the performance of the ADS, the system should preferably have access to information from all the sensors. For an ADS utilizing neural networks, the information output from all the sensors would be fused in a neural network model that is responsible for perception of the environment and/or planning of the path or trajectory to be executed by the ADS. The optimal performance of such a model may in itself be a safety consideration. For example, inaccurate or even erroneous outputs (e.g., missed detections, wrongful classifications, inappropriate candidate paths, etc.) will have safety consequences regardless of whether hardware or other software fails or not. Thus, both from a performance and safety perspective it is therefore desirable for the neural network model to have access to the information of all sensors on the vehicle to improve the accuracy of the output and thereby reduce the risk of accidents.

However, providing well-defined communication interfaces between the two compute units ("hardware platforms") is likely to result in a risk of information loss when data is exchanged between the two compute units. In other words, providing "human interpretable" interfaces between the two compute units may lead to impaired performance in the for perception and/or planning functionalities since these interfaces will essentially form bottlenecks in the data exchange, which may pose safety concerns when the information loss pertains to sensor data loss.

To this end, it is herein proposed to provide the various data processing models (e.g., encoding, fusion, and decoding) of the two compute units as layers of one single, end-to-end trained, neural network. Thereby, during the training phase of this neural network, the network itself will define the communication interface between the compute units and mitigate the bottle necking effect caused by human interpretable interfaces. The concept of training the processing models ("layers") across both compute units end-to-end, and running these models as one neural network during inference has the potential to provide more accurate results as compared to training the models on each compute unit individually.

The entire architecture as proposed herein is trained in an end-to-end manner. More specifically, during training, gradients can be propagated from the predictive output made by each cluster separately, and from the predictive output based on the combination of all sensor clusters. Thereby, during inference, if there is a hardware or software failure in one of the platforms, the predictions from the sensor cluster of the other platform can be used.

Accordingly, embodiments herein introduce a solution for enabling the deployment of neural network models that provide optimal performance when there is no hardware failure by operating on all sensors between different clusters simultaneously, while, at the same time, providing redundancy in case the hardware or software on one of the clusters fails. Thereby, the risk of a complete system failure may be reduced, and consequently the safety of the entire system improved.

In other words, embodiments herein propose an architecture that both enable the use of neural network models for automated driving systems that have access to the information from all sensors, regardless of which hardware cluster they are assigned to, while still providing redundancy in case the hardware or software in one of the hardware clusters would fail. Thereby, one is able to obtain perception and/or planning functionalities for automated driving systems that adhere to the redundancy requirements while still achieving high performance levels during times when there are no hardware or software failures.

It should be noted that while the present description often exemplifies various embodiments with only two platforms, the skilled person readily realizes that the same teachings and principles are applicable for architectures with more than two platforms, each with a corresponding sensor cluster.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

In the present context, a "machine learning algorithm" or "neural network" refers to a computational model or set of techniques that are used to enable a computer to solve a task, such as for example, the vehicle's perception system to interpret and understand the surrounding environment. Perception tasks in ADS involve the vehicle's ability to detect and recognize objects, obstacles, road signs, lane markings, pedestrians, other vehicles, and various environmental conditions. The ADS may use machine learning algorithms to process sensor data, such as data from cameras, lidar, radar, and other sensors, to make informed decisions about how to navigate safely. These algorithms use data-driven techniques to analyse and classify objects, understand the road geometry, predict the movement of other road users, and/or assess potential risks in real-time. Common types of machine learning algorithms used in ADS perception tasks include deep neural networks, convolutional neural networks (CNNs) (e.g., for camera image processing, lidar output processing, etc.), recurrent neural networks (RNNs) (e.g., for sequence data), and various other techniques like support vector machines (SVM) and decision trees.

The machine-learning algorithms are implemented in some embodiments using publicly available suitable software development machine learning code elements, for example, such as those which are available in Pytorch, Keras and TensorFlow or in any other suitable software development platform, in any manner known to be suitable to someone of ordinary skill in the art.

The terms "encoder" (or "encoder layers") and "decoder" (or "decoder layers") refer to components of neural network architectures designed to interpret and process sensory data from the vehicle's surroundings. The encoder is responsible for processing raw sensory inputs (e.g., camera images, lidar point clouds, or radar signals) and transforming them into a compact, abstract representation ("set of encoded features"). The decoder takes the encoded representation produced by the encoder and converts it back into a more interpretable output.

The compressed representation output from the encoder is often referred to as the "latent space" or "feature space". The latent space encodes important information about the input data (e.g., input image) in a compact form. Each dimension in the latent space can represent a different feature or concept.

Moreover, the representation may for example capture essential features like object boundaries, relative distances, and object classifications, while discarding irrelevant information. For example, the encoder might process a camera image, identifying and representing critical features like the presence of pedestrians, lane markings, traffic signs, or other vehicles. Thus, the encoder reduces the high-dimensional sensory data into a set of meaningful features that can be used to understand the driving environment. This representation may serve as the basis for tasks such as object detection, semantic segmentation (understanding the context of objects), and depth estimation (determining distances to objects). For example, in a convolutional neural network (CNN) for object detection, the encoder would extract hierarchical features (edges, textures, shapes) from camera images and progressively build up a detailed understanding of what's present in the scene.

As mentioned, the decoder takes the encoded representation produced by the encoder ("set of encoded features") and converts it back into a more interpretable output. This could involve predicting object locations, labelling parts of the image, or providing additional details such as the orientation or movement of objects. For example, if the perception task is object detection, the decoder could predict bounding boxes around identified objects (e.g., pedestrians, cars) and assign class labels to these objects (e.g., "car," "stop sign," "pedestrian"). Similarly, if the perception task is semantic segmentation, the decoder could take the encoded features and assign a class label to every pixel in the image, such as identifying the road surface, pedestrian zones, or vehicles. Moreover, if the perception task is depth estimation, the decoder would take the encoded features and predict the distance to various objects or points in the environment.

Moreover, the term "one or more layers" such as in reference to "one or more encoder layers", "one or more sensor fusion layers", or "one or more decoder layers" refer to components or parts of an end-to-end trained neural network. Thus, the various layers, together, form the entire end-to-end trained neural network and may therefore be understood as one single larger neural network.

The term "predictive output" (or "prediction output") refers to the final result generated by a neural network (e.g., a deep neural network) after processing an input, based on the patterns it has learned during training. In an encoder-decoder architecture, the "prediction output" refers to the output of the decoder. Moreover, the predictive output may be construed as the neural network's attempt to predict an outcome or make a decision about new data it hasn't seen before, using the learned weights and biases from its training phase. In the context of automated driving systems "predictive output" may refer to the network's predictions about the driving environment or the vehicle's future actions, based on the sensory data it receives (e.g., from cameras, radar, and lidar). For example, in a perception task in the form of a classification task, the predictive output could be the network identifying and classifying objects in the environment, such as pedestrians, vehicles, traffic signs, or lane markings. For instance, the neural network may predict the likelihood that an object detected ahead is a pedestrian versus a stationary object like a mailbox. Further, in a perception task in the form of a regression task the predictive output might be a continuous value like predicting the distance to the nearest obstacle, the speed of a neighbouring vehicle, or the time until a traffic light turns red. For example, the network might predict how far ahead the vehicle should start braking to stop safely at a red light.

In the present context, a "sensor" (or "sensor device") refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment. A "cluster" of sensors accordingly refers to a group or set of sensors, or in other words, a plurality of sensors.

The "surrounding environment" of the ego-vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

As used herein, the term "in response to" may be construed to mean "when or "upon" or "if" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

### Embodiments

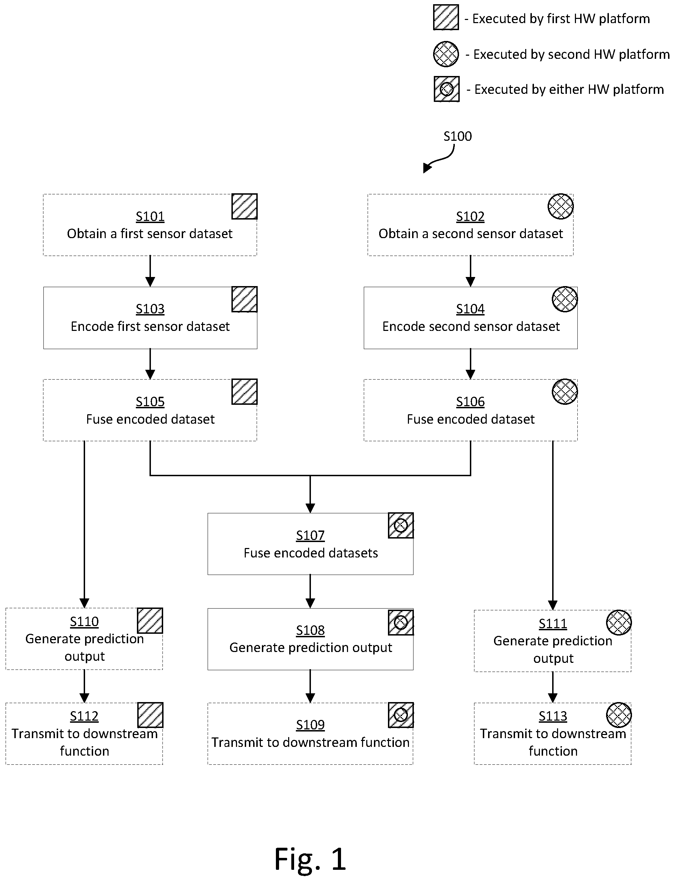

Fig. 1 is a schematic flowchart representation of a method S100 for generating a predictive output for an Automated Driving System (ADS) of a vehicle in accordance with some embodiments. The method S100 is a computer-implemented method S100, that may be performed online (e.g., by a processing system of the ADS-equipped vehicle). The processing system comprises a first hardware platform having one or more processors and one or more memories coupled to the one or more processors, and a second hardware platform having one or more processors and one or more memories coupled to the one or more processors. The one or more memories of each hardware platform store one or more programs that perform the steps, services and functions of the method S100 disclosed herein when executed by the one or more processors of each hardware platform. Moreover, the flowchart depicted in Fig. 1 is provided with a legend indicating which hardware ("HW") platform is to execute the various steps or processes in the method S100.

The method S100 may comprise obtaining S101, using one or more processors of a first hardware platform of the vehicle, a first sensor dataset generated by a first cluster of sensors of the vehicle. Further, the method S100 comprises encoding S103, using one or more processors of a first hardware platform of the vehicle, the first sensor dataset generated by the first cluster of sensors of the vehicle using one or more first encoder layers in order to form an encoded first sensor dataset. In some embodiments, there is provided one set of encoder layers per sensors, meaning that the sets of encoder layers are sensor-specific. In some embodiments, there is provided a smaller number of sets of encoder layers than there are sensors in the cluster of sensors, meaning that at least one set of the sets of encoder layers processes the sensor output from two or more sensors of the cluster. For example, the sets of encoder layers may be sensor modality specific, meaning that each set of encoder layers processes all of the sensor output from the sensors of the cluster that are of the same sensor modality.

In some embodiments, the method S100 further comprises obtaining S102, using one or more processors of a second hardware platform of the vehicle, a second sensor dataset generated by a second cluster of sensors of the vehicle. The method S100 further comprises encoding S104, using one or more processors of a second hardware platform of the vehicle, the second sensor dataset generated by the second cluster of sensors of the vehicle using one or more second encoder layers in order to form an encoded second sensor dataset. As before, one or more encoder layers may comprise one or more sets of encoder layers where the sets of encoder layers may be sensor-specific, or where one set of encoder layers may process and encode the sensor output from two or more sensors of the cluster.

As mentioned in the foregoing, the first and second hardware platforms are separate hardware platforms and each sensor of the first cluster of sensors is different from the sensors of the second cluster of sensors. However, in some embodiments, the first cluster of sensors and the second cluster of sensors may have one or more common sensors. For example, if the vehicle is only equipped with one particular sensor (e.g., forward facing wide-angle camera) that is desirable to include in both clusters, then that particular sensor may be a common sensor between the clusters.

In some embodiments, the first cluster of sensors comprises sensors of different modalities and the second cluster of sensors comprises sensors of different modalities. In other words, the sensors of the first cluster are not necessarily all cameras and the sensors of the second cluster are not necessarily all lidars, but each cluster may comprise a mixture of sensor types/modalities.

Further, the method S100 comprises fusing S107, using one or more processors of the first hardware platform or by one or more processors of the second hardware platform of the vehicle, at least a portion of the encoded first sensor dataset and at least a portion of the encoded second sensor dataset using one or more sensor fusion layers in order to form a set of fused encoded sensor data features. In other words, feature vectors ("encoded sensor dataset") are combined (e.g., via concatenation, averaging, or a learned transformation). Thereby the unique properties of each sensor's output are retained while combining them into a unified representation.

The method S100 further comprises generating S108, using one or more processors of the hardware platform that performed the fusion S107, a predictive output based on the set of fused encoded sensor data features using one or more decoder layers. The one or more first encoder layers, the one or more second encoder layers, the one or more sensor fusion layers, and the one or more decoder layers together form an end-to-end trained neural network.

Further, the method S100 may comprise transmitting S109, using one or more processors of the hardware platform that generated S108 the predictive output, the generated predictive output to one or more downstream functions of the Automated Driving System configured to control the vehicle based on the generated predictive output. In a case where the predictive output is in the form of a perception output, a downstream function of the ADS may for example be a path planning module configured to generate candidate paths for execution by the vehicle at least partly based on the prediction output or a localizer module configured to output a position or pose (position and heading) of the vehicle at least partly based on the prediction output. However, in a more general case, the downstream function of the ADS may be in the form a decision and control module configured to output control signals to one or more actuators of the vehicle so to control a movement of the vehicle at least partly based on the prediction output.

The fusion S107 may be performed on the encoded sensor datasets as output from the encoder layers or on fused encoded sensor datasets, where the latter alternative will be elaborated upon in the following. However, regardless of the fusion being performed on encoded sensor datasets as output from the encoder layers or on fused encoded sensor datasets, the fusion S107 is still considered to be a "fusion of encoded sensor datasets".

Accordingly, the method S100 may employ a two-step fusion process, where the encoded sensor data generated at each individual hardware platform is "pre-fused" before the data is shared to the other platform for a second stage fusion of the encoded sensor data. Thereby the amount of data that is shared between the hardware platform may be reduced, thereby reducing the bandwidth need between the platforms.

Accordingly, in some embodiments, the one or more sensor fusion layers (that performed the fusion S107) is one or more stage-two sensor fusion layers and the set of fused encoded sensor data features is a set of stage-two fused encoded sensor data features.

Further, the method S100 may comprise fusing S105, using one or more processors of the first hardware platform of the vehicle, at least a portion of the encoded first sensor dataset using one or more first stage-one fusion layers in order to form a first set of fused encoded sensor data features. In other words, feature vectors ("encoded sensor dataset") from the encoder layers are combined (e.g., via concatenation, averaging, or a learned transformation). Thereby the unique properties of each sensor's output are retained while combining them into a unified representation.

Further, the method S100 comprises fusing S106, using one or more processors of a second hardware platform of the vehicle, at least a portion of the encoded second sensor dataset using one or more second stage-one fusion layers in order to form a second set of fused encoded sensor data features. As before, feature vectors ("encoded sensor dataset") from the encoder layers are combined (e.g., via concatenation, averaging, or a learned transformation). Thereby the unique properties of each sensor's output are retained while combining them into a unified representation.

Thus, the fusing S107 at least a portion of the encoded first sensor dataset and at least a portion of the encoded second sensor dataset may comprise fusing the first set of fused S105 encoded sensor data features and the second set of fused S106 encoded sensor data features using the one or more stage-two sensor fusion layers in order to form the set of stage-two fused encoded sensor data features.

In other words, a "second-stage" fusion S107 is performed to combine the "first-stage" fused representations of the surrounding environment of the vehicle. Thus, feature vectors ("fused encoded sensor data features") from the first stage-one fusion layers and the second stage-one fusion layers are combined (e.g., via concatenation, averaging, or a learned transformation).

As before, the one or more first encoder layers, the one or more second encoder layers, the one or more first stage-one sensor fusion layers, the one or more second stage-one sensor fusion layers, the one or more stage-two sensor fusion layers, and the one or more decoder layers together form the end-to-end trained neural network.

It can be noted that the various steps (e.g., S101-S106) in the method S100 are not necessarily performed by the "same" one or more processors of the dedicated hardware platform, but can be performed by different processors in a type of distributed processing architecture. However, naturally, the various steps of the method may be performed by the same one or more processors of a hardware platform.

As mentioned, to allow the ADS to have access to all of the sensor measurements, the different clusters of sensors and computational platforms ("compute units") should be linked, but the data bandwidth limit between two hardware is generally much smaller as compared to the internal bandwidth within each hardware cluster. Thus, feeding the output from all sensors on the vehicle to both hardware platforms at all times is often considered unfeasible, and therefore developers are often faced with a trade-off between performance and redundancy.

The present inventors realized that when designing a neural network model or architecture for ADS applications that operates on multiple sensors simultaneously, one particular challenge arose. In more detail, when new data is output by each sensor, that data may be encoded by an encoder network specific for each sensor at that particular time stamp. After a certain time period or interval, the data from all sensor measurements output during this time period/interval is merged into a single representation of the surrounding environment of the vehicle (otherwise referred to as "spatial fusion"). Moreover, a historical representation of the surrounding environment before this time interval is stored in memory. Thus, when the representation of the current time interval is made, it can be combined with the historical one stored in memory to obtain a final representation of the current state of the surrounding environment of the vehicle (otherwise referred to as "temporal fusion"). The final predictive output can then be provided by one or more decoder networks trained to solve various tasks (object detection, object classification, object tracking, object trajectory prediction, path planning, trajectory planning, etc.) that receive the spatially and temporally fused states of the surrounding environment at regular intervals.

A challenge when designing a neural network model or architecture that (i) follows the above process and (ii) is suitable for implementations in a vehicle where multiple sensors are grouped into different clusters, each with a separate computational hardware, is that the available data bandwidth between these clusters is very limited.

In more detail, if one considers a scenario with an ADS-equipped vehicle having two hardware platforms, each with their own clusters of sensors and computational hardware ("platform A" and "platform B"). Then, one would fuse the information output from all of the sensors on the vehicle simultaneously. Thus, to be able to run such a solution in a vehicle, it would require that all of the sensor data, or more specifically, all of the encoded sensor data, is sent from platform A to platform B, or vice-versa. Subsequently, the spatial and temporal fusion could proceed on the platform that received the information. However, the "update" (temporal fusion) of the representation of the surrounding environment when new sensor measurements are output must be executed in a timely manner since otherwise there is a risk that the ADS would not be able to react in time as situations develop within the surrounding environment, potentially leading to safety-critical issues. Therefore, the sensor data or encoded sensor data must be sent from one platform to the other at a sufficiently high rate to ensure that the temporal fusion can be executed in a timely manner. However, this may not be possible with the limited computational power onboard the vehicle, and the bandwidth restrictions between the hardware platforms that this implies. Moreover, even if it would be "possible" to send the sensor data or encoded sensor data between the platforms, it may stunt or otherwise impede the performance of the neural network model to enforce this requirement of sharing large amounts of data between hardware platforms. This is because it may require that the sensor data packets are small or that the encoded sensor data is of a lower dimensionality, which reduces the amount of information that is available for generating the predictive output. Thus, it is desirable to be able to use encodings of a higher dimensionality as it generally translates into better performance, however, this also translates into a higher bandwidth requirement if the sensor data encodings are to be transmitted between platforms.

Therefore, it is herein proposed to introduce a multi-stage sensor fusion architecture, where a complete sensor fusion step S105, S106 is performed on each hardware platform separately before data is sent between the platforms on the encoded sensor data generated from the platform's own cluster of sensors. Thus, instead of sending the sensor data or encoded sensor data to another platform, only the fused states are shared between the platforms. The platform that receives the fused states can then execute a second fusion step S107 to fuse that platform's own fused state (originating from sensor measurements of its own cluster) with the received fused state and provide a final fused representation of the surrounding environment.

The stage-one sensor fusion steps S105, S106 (executed at each platform) combines the information comprised in the output from each sensor into a single representation of what is needed to solve the final task of the entire model or architecture. Moreover, the inventors realized that more relevant information can be stored, per byte, in the fused state representation than in the encoded sensor data from each sensor. This is because there is generally a large degree of redundancy between the multiple sensors within one cluster, and sending the sensor data or encoded sensor data inevitably results in transmission of redundant information. Thus, by executing a first fusion step S105, S106 before sharing data between platforms, more relevant information is shared between the platforms given a fixed bandwidth limitation between the clusters as compared to sharing the sensor data or encoded sensor data.

Furthermore, in some embodiments, the method S100 further comprises, in response to the first hardware platform and the second hardware platform both being operational, receiving, using one or more processors of the first hardware platform of the vehicle, the second set of fused encoded sensor data from the second hardware platform, and fusing S107, using one or more processors of the first hardware platform of the vehicle, the first set of fused encoded sensor data features and the second set of fused encoded sensor data features using the one or more stage-two sensor fusion layers in order to form the set of stage-two fused encoded sensor data features. The method S100 may further comprise, generating S108, using one or more processors of the first hardware platform of the vehicle, the predictive output based on the set of stage-two fused encoded sensor data features using one or more decoder layers. In other words, if both hardware platforms are operational, the first hardware platform may receive the first-stage fused features from the second platform, perform the second-stage fusion, and generate the predictive output based on the second-stage fused information.

Similarly, in some embodiments, the method S100 further comprises, in response to the first hardware platform and the second hardware platform both being operational, receiving, using one or more processors of the second hardware platform of the vehicle, the first set of fused encoded sensor data from the first hardware platform, and fusing S107, using one or more processors of the second hardware platform of the vehicle, the first set of fused encoded sensor data features and the second set of fused encoded sensor data features using the one or more stage-two sensor fusion layers in order to form the set of stage-two fused encoded sensor data features. The method S100 may further comprise, generating S108, using one or more processors of the second hardware platform of the vehicle, the predictive output based on the set of stage-two fused encoded sensor data features using one or more decoder networks. In other words, if both hardware platforms are operational, the second hardware platform may receive the first-stage fused features from the first platform, perform the second-stage fusion, and generate the predictive output based on the second-stage fused information.

The choice of which hardware platform of the two hardware platforms that is to execute the second-stage fusion S107 and the subsequent steps may be arbitrary or based on which of the two hardware platforms has the most available computational power at that moment. The reporting of a hardware platform being operational may for example be provided by a separate module or system configured to monitor each hardware platform to detect errors or bugs as readily understood by the skilled person in the art. Moreover, the term "operational" with respect to the hardware platforms refers to that a hardware platform is not reporting or exhibiting any detectable hardware or software bugs or glitches during operation.

Further, in some embodiments, the one or more decoder layers are one or more stage-two decoder layers. Accordingly, in response to the first hardware platform being operational and the second hardware platform being non-operational, the method S100 may further comprise, by one or more processors of the first hardware platform of the vehicle, generating S110 the predictive output based on the first set of fused encoded sensor data features using one or more first stage-one decoder layers. Furthermore, the method S100 may comprise, transmitting S112, using one or more processors of the first hardware platform of the vehicle, the generated S110 predictive output to one or more downstream functions of the Automated Driving System configured to control the vehicle based on the generated predictive output. In other words, if the second hardware platform is non-operational (i.e., experiencing hardware or software errors), then the predictive output is generated S110 by the first hardware platform using the first-stage fused S105 representation of the surrounding environment of the vehicle.

Analogously, in response to the first hardware platform being non-operational and the second hardware platform being operational, the method S100 may further comprise by one or more processors of the second hardware platform of the vehicle, generating Sill the predictive output based on the second set of fused encoded sensor data features using one or more second stage-one decoder layers. Furthermore, the method S100 may comprise, transmitting S113, using one or more processors of the second hardware platform of the vehicle, the generated predictive output to one or more downstream functions of the Automated Driving System configured to control the vehicle based on the generated predictive output. In other words, if the first hardware platform is non-operational (i.e., experiencing hardware or software errors), then the predictive output is generated Sill by the second hardware platform using the first-stage fused S106 representation of the surrounding environment of the vehicle.

Accordingly, in order to maintain the safety-critical redundancy of having separate platforms, some embodiments herein propose that each platform is provided with a capability to generate a predictive output solely on the fused state representation generated by the own platform. Thus, in addition to the one or more decoder networks that provide a prediction output based on the fused states of all platforms (and all sensor clusters), each platform may be provided with an equivalent set of decoder networks that are trained to provide a prediction output based on the fused state representation of the sensor data output by its own sensor cluster. This capability to generate a predictive output solely on the fused state representation generated by the own platform is seamlessly provided with the capability to generate a predictive output on the combined outputs of both platforms by training the entire software architecture in an end-to-end manner.

Thereby, the safety-related redundancy for the ADS of the vehicle is provided, while still being able to provide the necessary predictive output in a smooth and efficient manner to ensure that the ADS can still manoeuvre the vehicle accurately and safely. Each hardware platform may be arranged with a set of decoder layers for generating a predictive output based on the second-stage fused S107 encoded features and a set of decoder layers for generating a predictive output based on the first-stage fused S105, S106 encoded features.

However, in some embodiments, the same decoder layers are used to process the second-stage fused S107 encoded features and the first-stage fused S105, S106 encoded features. The specific setup will depend on how the decoder layers are trained and on the provided specifications for the system. Moreover, even when the predictive output is generated on the basis of sensor output generated by only one of the clusters, the operational hardware platform may still execute both fusion steps S105/106 and S107 depending on the specific setup. Even though the second stage fusion may seem redundant in that case, the data flow may be setup in a manner so that the decoder layers only receive input from the second-stage fusion layers.

The various fusion processes S105, S106, S107 may be as "intermediate fusion" and is a technique that can be used for combining the feature representations of different sensor modalities after they have been encoded by their respective networks. In a Bird's Eye View (BEV) fusion approach, which is particularly suitable to be used in autonomous driving applications, sensor data (from cameras, LiDAR, and radar) is transformed into an encoded BEV representation (e.g., a BEV grid) before being fused and decoded. BEV is advantageous because it provides a top-down, geometrically consistent view of the environment, making it easier to perceive spatial relationships between objects (e.g., roads, cars, pedestrians) around the vehicle.

For example, in reference to either first-stage fusion S105, S106, if one assumes that the first sensor in a cluster is a camera, and the second sensor in the same cluster is a lidar. Then, images captured by cameras are passed through an encoder network (e.g., convolutional neural network (CNN) encoder), extracting high-level image features like edges, textures, and object classes. The output of the camera encoder is typically a set of feature maps (in 2D). Then, for the second sensor, point clouds captured by the lidar may be passed through a voxel-based or point-based encoder (e.g., PointNet, VoxelNet). This converts the sparse 3D point cloud data into a dense feature representation.

Before fusion S105, S106, the encoded S103, S104 data from each sensor may be projected into a BEV format. In more detail, the encoded sensor dataset (e.g., the CNN-encoded feature maps) are transformed from their 2D image-plane perspective to a top-down BEV representation. This involves projecting the features onto a common ground plane (e.g., using learned or geometric transformation matrices) to align them with the 3D environment. The lidar point clouds, which are inherently in 3D, may be "voxelized" into grid-like structures, making the transformation to BEV straightforward. Each voxel is collapsed into a 2D plane, creating a dense BEV feature map. The projection to BEV allows all sensor modalities to align on a common reference frame that simplifies the fusion S105, S106 process.

Once all the encoded datasets are in BEV format, they may be fused S105, S106. This fusion S105, S106 may be done at the feature level, combining information from different sensors to create a richer and more robust representation of the environment. As mentioned above, there are several ways to implement intermediate fusion (e.g., via concatenation, averaging, or a learned transformation). In more detail, using a concatenation approach, the encoded data features (BEV feature maps) from each sensor are concatenated along the channel dimension. For example, if the camera BEV map has 128 channels and the LiDAR BEV map has 64 channels, the resulting fused map will have 192 channels. This method preserves all feature information from each modality. Using an element-wise summation approach, the encoded data features from each sensor are summed element-wise, fusing information directly at each spatial location. The element-wise summation approach can help balance the contributions of different sensors, though it may lose some modality-specific nuances. Using a learned transformation requires the fusion network to be trained so to "learn" a set of weights or transformation functions (such as fully connected layers or convolutional layers) that combine the BEV feature maps from each sensor. This allows the fusion network to learn which features from each sensor are most important and how to weigh them, depending on the scenario.

As readily understood by the skilled person in the art, a similar approach may be used for the second-stage fusion with the difference in that the input to the third fusion network two or more already fused representations of the surrounding environment of the vehicle.

Executable instructions for performing these functions are, optionally, included in a non-transitory computer-readable storage medium or other computer program product configured for execution by one or more processors.

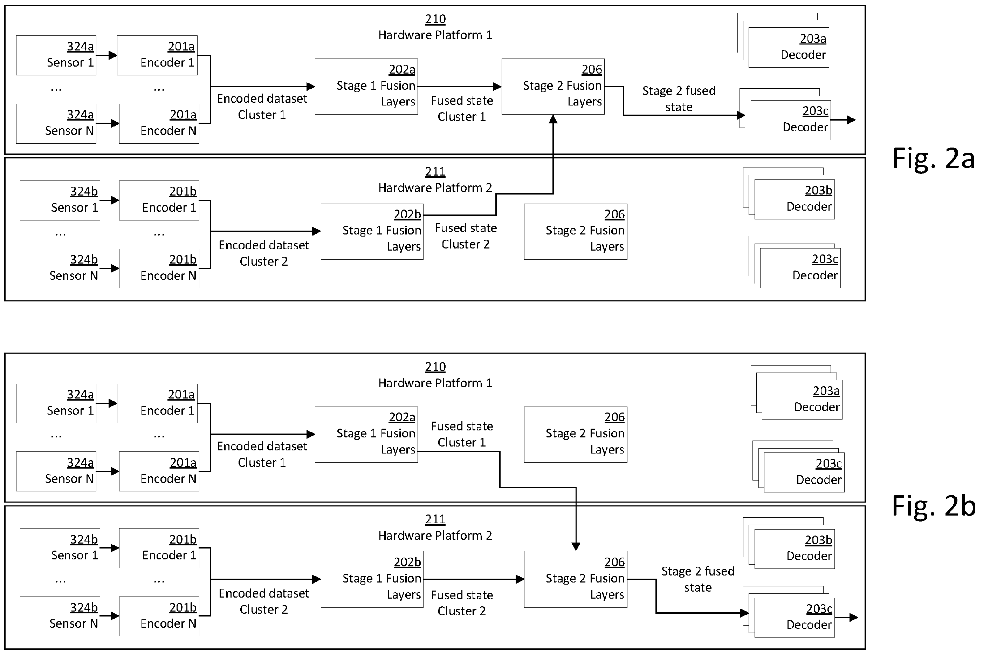

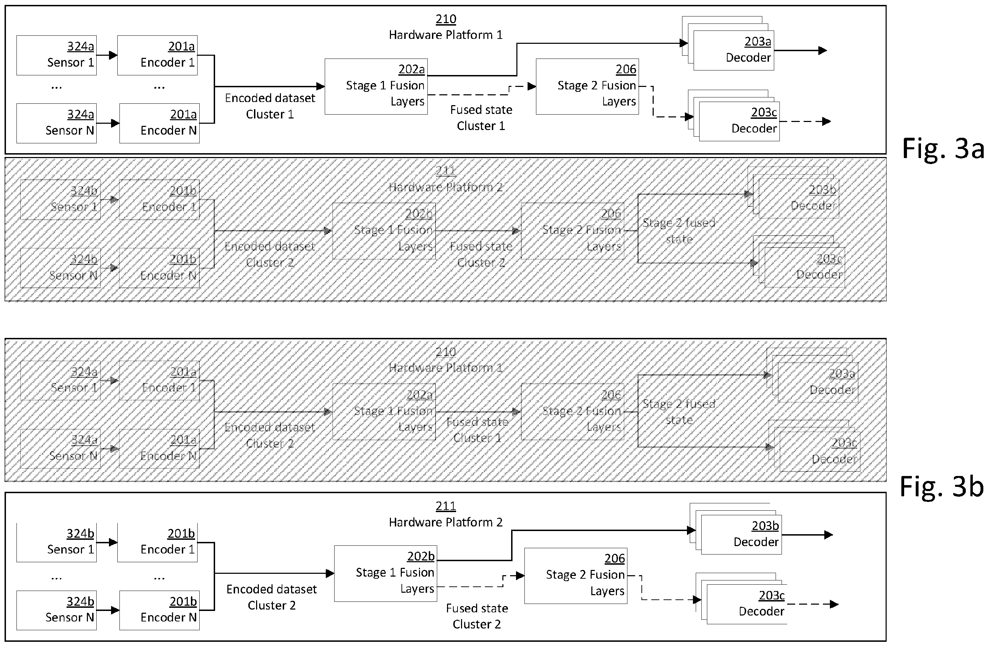

Fig. 2a, Fig. 2b, Fig. 3a and Fig. 3b are schematic block diagram representations of a system 10 for generating predictive output for an Automated Driving System 310 of a vehicle 1, in accordance with some embodiments. The system 10 comprises two separate hardware platforms 210, 211 having control circuitry (e.g. one or more processors) 11a, 11b configured to perform the functions of the method S100 disclosed herein, where the functions may be included in a non-transitory computer-readable storage medium 12a, 12b or other computer program product configured for execution by the control circuitry 11a, 11b. In other words, each hardware platform 210, 211 of the system 10 comprises one or more memory storage areas 12a, 12b comprising program code, the one or more memory storage areas 12a, 12b and the program code configured to, with the one or more processors 11a, 11b, cause the system 10 to perform the method S100 according to any one of the embodiments disclosed herein.

In more detail, Figs. 2a and 2b depict a scenario where both hardware platforms 210, 211 are operational, and schematically illustrate the information flow through the system in accordance with some embodiments. Figs. 3a depicts a scenario where the first hardware platform 210 is operational and the second hardware platform 211 is non-operational, while Fig. 3b depicts a scenario where the first hardware platform 210 is non-operational and the second hardware platform 211 is operational, and both figures schematically illustrate the information flow through the system in accordance with some embodiments.

Thus, the system 10 comprises a first hardware platform 210 comprising a first cluster of sensors 324a and one or more processors 11a configured to encode a first sensor dataset generated by the first cluster of sensors of the vehicle using one or more first encoder layers 201a in order to form an encoded first sensor dataset. The system 10 further comprises a second hardware platform 211 comprising a second cluster of sensors 324b and one or more processors 11b configured to encode a second sensor dataset generated by the second cluster of sensors of the vehicle using one or more second encoder layers 201b. The second cluster of sensors 324b comprises different sensors compared to the first cluster of sensors 324a. In some embodiments, each sensor within a cluster of sensors is of a different modality as compared to the other sensors within the cluster. However, in some embodiments, the first cluster of sensors and the second cluster of sensors may have one or more common sensors. For example, if the vehicle is only equipped with one particular sensor (e.g., forward facing wide-angle camera) that is desirable to include in both clusters, then that particular sensor may be a common sensor between the clusters.

Moreover, the one or more processors 11a of the first hardware platform 210 or the one or more processors 11b of the second hardware platform 211 are further configured to fuse at least a portion of the encoded first sensor dataset and at least a portion of the encoded second sensor dataset using one or more sensor fusion layers 206 in order to form a set of fused encoded sensor data features, generate a predictive output based on the set of fused encoded sensor data features using one or more decoder layers 203c. Moreover, the one or more first encoder layers 201a, the one or more second encoder layers 201b, the one or more sensor fusion layers 206, and the one or more decoder layers 203a, 203b together form an end-to-end trained neural network.

Furthermore, the one or more processors 11a of the first hardware platform or the one or more processors 11b of the second hardware platform of the vehicle may be further configured to transmit the generated predictive output to one or more downstream functions of the Automated Driving System 310 configured to control the vehicle based on the generated predictive output.

Further, in some embodiments, the one or more sensor fusion layers 206 is one or more stage-two sensor fusion layers 206 and the set of fused encoded sensor data features is a set of stage-two fused encoded sensor data features. The one or more processors 11a of the first hardware platform 210 may be further configured to fuse at least a portion of the encoded first sensor dataset using one or more first stage-one sensor fusion layers 202a in order to form a first set of fused encoded sensor data features. Moreover, the one or more processors 11b of the second hardware platform 211 may be further configured to fuse at least a portion of the encoded second sensor dataset using one or more second stage-one sensor fusion layers 202b in order to form a second set of fused encoded sensor data features.

Accordingly, the previously described fusion may be executed as a stage-two fusion. Thus, the fusing of at least a portion of the encoded first sensor dataset and at least a portion of the encoded second sensor dataset may comprise fusing the first set of fused encoded sensor data features and the second set of fused encoded sensor data features using the one or more stage-two sensor fusion layers 206 in order to form the set of stage-two fused encoded sensor data features. Here, the one or more first encoder layers 201a, the one or more second encoder layers 201b, the one or more first stage-one sensor fusion layers 202a, the one or more second stage-one sensor fusion layers 202b, the one or more stage-two sensor fusion layers 206, and the one or more decoder layers 203c together form the end-to-end trained neural network

Accordingly, as illustrated in Fig. 2a, in response to both hardware platform 210, 211 being operational, the one or more processors 11a of the first hardware platform may be configured to receive the second set of fused encoded sensor data from the second hardware platform 211, fuse the first set of fused encoded sensor data features and the second set of fused encoded sensor data features using the one or more stage-two sensor fusion layers 206 in order to form the set of stage-two fused encoded sensor data features, and generate the predictive output based on the set of fused stage-two encoded sensor data features using one or more decoder networks 203c. Analogously, as illustrated in Fig. 2b, in response to both hardware platform 210, 211 being operational, the one or more processors 11b of the second hardware platform may be configured to receive the first set of fused encoded sensor data from the first hardware platform 210, fuse the first set of fused encoded sensor data features and the second set of fused encoded sensor data features using the stage-two sensor fusion network 206 in order to form the set of fused stage-two encoded sensor data features, and generate the predictive output based on the set of stage-two fused encoded sensor data features using one or more decoder networks 203c.

Thus, while both hardware platforms are operational either one of the hardware platforms transmits its first-stage fused representation of the surrounding environment to the other platform, which then performs a second-stage fusion by combining its own first-stage fused representation with the one received from the other platform. Thereby, the final prediction output is based on all of the available sensor measurements of the vehicle while maintaining a lower bandwidth usage between the platforms as compared to transmitting the sensor data or encoded sensor data directly from one platform to the other.

Further, as depicted in Fig. 3a, in response to the first hardware platform 210 being operational and the second hardware platform 211 being non-operational, the one or more processors 11a of the first hardware platform 210 of the vehicle 1 may be configured to generate the predictive output based on the first set of fused encoded sensor data features using one or more decoder layers 203a, 203c. In this case, the one or more decoder layers may be stage-one decoder layers 203a specifically configured to generate the predictive output based on the first set of fused encoded sensor data, or the previously used decoder layers 203c.

In other words, if the second hardware platform should exhibit some hardware failure or software failure, the first hardware platform can provide the predictive output based on its own sensor measurements and effectively skip the second-stage fusion. Thereby, the redundancy required for safe operation of the ADS is achieved, and the system maintains adequate functionality even if one of the hardware platforms should fail. However, as indicated in Fig. 3a, the first hardware platform 210 may still execute the stage-two fusion on the first set of fused encoded features and feed that output to the one or more decoder layers 203c. Such variants will as mentioned depend on specific implementations of the architecture.

Analogously, as depicted in Fig. 3b, in response to the first hardware platform 210 being non-operational and the second hardware platform 211 being operational, the one or more processors 11b of the second hardware platform 211 of the vehicle 1 may be configured to generate the predictive output based on the second set of fused encoded sensor data features using one or more decoder layers 203b, 203c. As before, the one or more decoder layers may be stage-one decoder layers 203b specifically configured to generate the predictive output based on the first set of fused encoded sensor data, or the previously used decoder layers 203c.

The herein proposed system 10 may be realized based on a transformer architecture and the notion of "queries". The "queries" refer to a component involved in the self-attention mechanism in transformer-type neural networks, other relevant components are keys and values. Here, a query refers to a vector representation of the current token that the model is focusing on at a particular step of the transformer's attention mechanism. The query essentially asks "how much attention should I pay to other tokens?" when processing input sequences. Each token in the input sequence also has a corresponding key, which represents a vector summarizing how important that token is relative to others, based on specific features. The value is a vector that contains the actual content or information that is being passed along or attended to during the attention process. Accordingly, for each token, the query vector is compared with the key vectors of all other tokens in the sequence. This comparison is usually done by calculating the dot product between the query and the keys. The result is a set of attention scores that determines how much focus the token (represented by the query) should place on other tokens (represented by their keys). These attention scores are then used to weight the corresponding values, which represent the actual information that gets passed through the attention layer. This self-attention mechanism enables transformers to capture long-range dependencies and relationships between features in a data sequence.

Accordingly, queries may be construed as high-dimensional learnable vectors that can extract information from different data sources. In accordance with some embodiments, a first set of queries may be purposed to extract information from several timesteps of the encoded first sensor data sets for the first hardware platform. Thereby the first-stage spatial and temporal fusion may be achieved. The different queries of the first set of queries may be trained to extract information about different relevant entities in the surrounding environment, such as vehicles and pedestrians and their behaviours, lane markings, traffic signs, etc. Once having extracted this information, this set of queries correspond to a highly compressed, low-bandwidth representation of the surrounding environment, which can be sent to a different hardware platform for further processing (second-stage fusion). An analogous set of queries (second set of queries) can be purposed to extract temporal and spatial information from the encoded second sensor datasets of the second hardware platform. These queries can then be sent for further processing (second-stage fusion) by the other hardware platform.

The second-stage fusion processing corresponds to the fusion between the first set of queries and the second set of queries, which is expected to require less compute than the first-stage fusion processing since it does not involve the initial sensor data encodings. There are several ways to perform this second-stage fusion between the two sets of queries. For example, one can have the two different query sets extract information from each other. Alternatively, one can have yet another set of queries (third set of queries) purposed to extract information from the first and second sets of queries.

Even though the software (SW) architecture as described herein is applied on two separate hardware platforms ("compute units"), the same SW architecture may be applied on the same hardware platform ("compute unit") in accordance with some embodiments. While not achieving full hardware redundancy in case of hardware failure, one may still achieve software redundancy in case of software failure. Software redundancy may be enough for automated driving systems having lower safety requirements (c.f., ADAS vs AD).

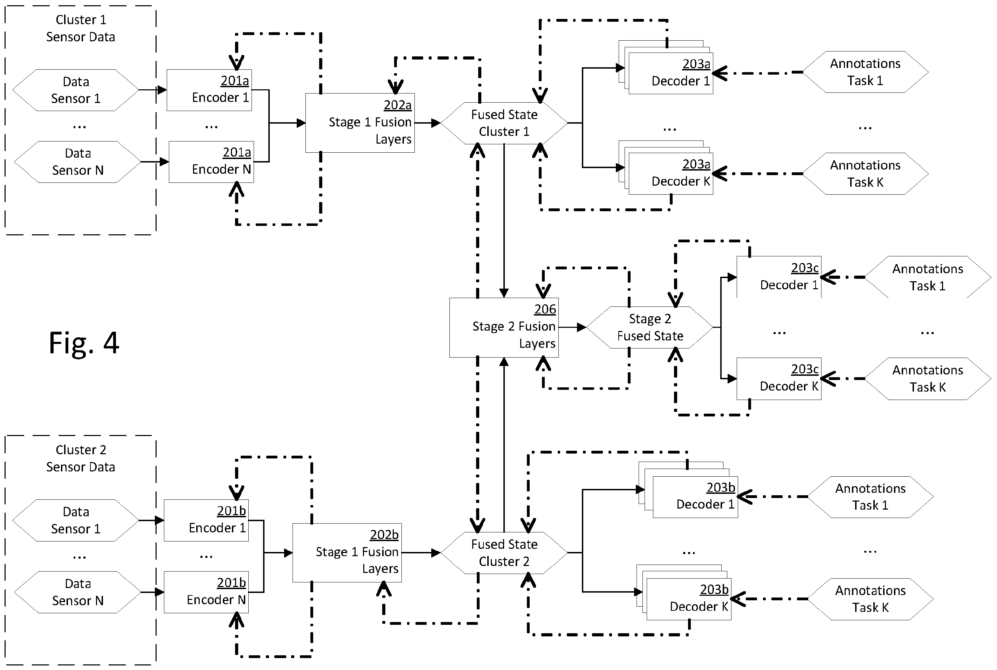

Fig. 4 is a schematic block diagram representation depicting and end-to-end training setup of a system for generating a predictive output for an Automated Driving System of a vehicle in accordance with some embodiments. Here, datasets are indicated in the elongated hexagon shapes while algorithms or layers are indicated in rectangles. Moreover, the downstream dataflow (inference) is indicated by solid line arrows, while the dataflow (training signal) used for the end-to-end training of the encoder layers, fusion layers, and decoder layers are indicated by dashed-dotted lines.

As mentioned in the foregoing, the encoder layers 201a, 201b might be shared between different sensors within a cluster of sensors, or they may be sensor-specific. Moreover, the one or more decoder layers 203 may be shared between the three situations when they are applied (decoding second-stage fused encodings, decoding first-stage fused encodings from the first hardware platform, and decoding first-stage fused encodings from the second hardware platform). Meaning that the same one or more decoder layers are used regardless of the input being a set of stage-one fused sensor data or a set of stage-two fused sensor data, and regardless if the input originates from the first hardware platform, the second hardware platform, or both. However, in some embodiments, three separate sets of decoder layers 203a, 203b, 203c are provided for processing the fused encodings in the three situations.

Moreover, the training of the common one or more decoder layers, or the three separate sets of decoder layers 203a, 203b, 203c, if three separate sets of decoders are used, may be performed at the same time. Moreover, within the one or more decoder layers 203a, 203b, 203c one may have sub-sets of decoder layers configured to solve different tasks (as indicated in Fig. 4, Decoder 1... Decoder K). In other words, a first subset of decoder layers (e.g., Decoder 1) may be trained to generate a predictive output in the form of pedestrian detection and classification, a second subset of decoder layers (e.g., Decoder 2) may be trained to generate a predictive output in the form of lane marker detection and classification, and a third subset of decoder layers (e.g., Decoder K) may be trained to generate expected trajectories of dynamics objects in the surrounding environment of the vehicle. All of these subsets of decoder layers (solving different tasks) may be trained simultaneously. However, in some embodiments, the training of all decoder layers, or all subset of decoder layers within a set of decoder layers, may be performed separately.

The entire architecture, including the encoder layers 201a, 201b, the fusion layers 202a, 202b, 206, and the decoder layers 203a, 203b, 203c is trained together in an end-to-end fashion using supervised learning techniques. In more detail, during the training phase, one has a training dataset comprising sensor datasets (measurements from the corresponding sensors from each cluster of sensors) forming input objects and a corresponding set of annotated output for each specific perception task forming a desired output. Thus, for each sensor dataset there is a desired output that the entire system including all layers is intended to generate for a specific perception task. For example, if the system is intended for object detection tasks, the annotated dataset may comprise a 3D scene with 3D bounding boxes that have been manually added.

Assuming the encoder layers 201a, 201b, the fusion layers 202a, 202b, 206, and the decoder layers 203a, 203b, 203c have been initialized and the parameters of each network has been setup, the input objects are fed through the processing chain. This step is often referred to as a forward pass. Next, a loss calculation is performed where the predictive output is provided as input together with the desired output (annotations task i) to a loss function, also known as a cost function. The loss function represents a specific mathematical function that quantifies the discrepancy between predicted values (predictive output) and actual ground-truth values (annotations task i) in the training dataset.

Depending on the specific perception task different loss functions may be used. For example, one can use cross-entropy loss, classification loss, regression loss, dice loss, or combinations thereof. Once the discrepancy between predicted values and actual ground-truth values has been quantified, the gradients of the loss with respect to the model parameters of the encoder layers 201a, 201b, the fusion layers 202a, 202b, 206, and the decoder layers 203a, 203b, 203c are computed using backpropagation. Next, the model parameters of the encoder layers 201a, 201b, the fusion layers 202a, 202b, 206, and the decoder layers 203a, 203b, 203c are updated using an optimization algorithm, such as Adam, Stochastic Gradient Descent, or RMSprop. The update aims to minimize the loss function. This process is then iterated by repeating the forward pass, loss calculation, backward pass, and parameter update steps for multiple epochs until the model performance converges.

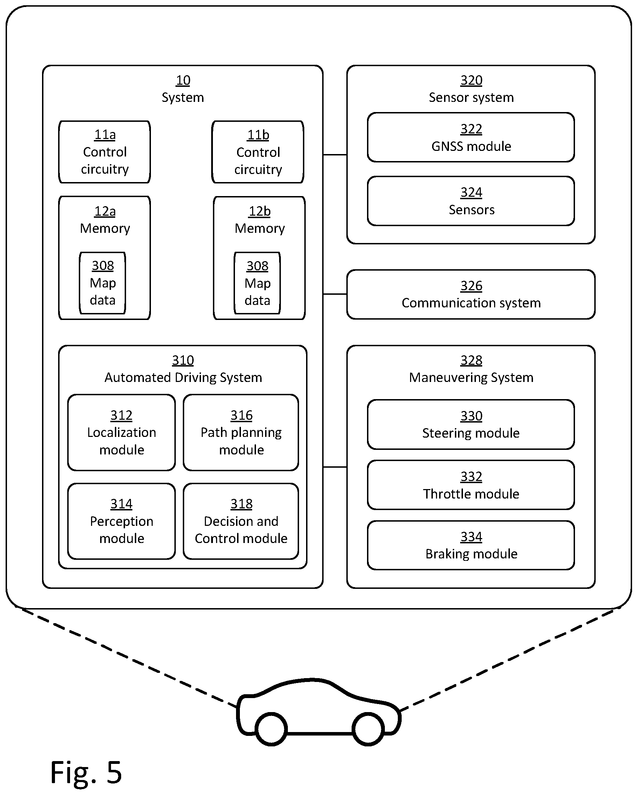

Fig. 5 is a schematic illustration of an ADS-equipped vehicle 1 comprising such a system 10. As used herein, a "vehicle" is any form of motorized transport. For example, the vehicle 1 may be any road vehicle such as a car (as illustrated herein), a motorcycle, a (cargo) truck, a bus, etc. However, in some embodiments, the vehicle may be in the form of an autonomous aircraft or boat.

The system 10 two separate hardware platforms each comprising its own control circuitry 11a, 11b and a memory 12a, 12b. Each control circuitry 11a, 11b may physically comprise one single circuitry device. Alternatively, the control circuitry 11a, 11b may be distributed over several circuitry devices. As an example, the system 10 may share its control circuitry 11a, 11b with other parts of the vehicle 1 (e.g. the ADS 310). Moreover, the system 10 may form a part of the ADS 310, i.e. the system 10 may be implemented as a module or feature of the ADS. In other words, the ADS may be executable by either one of the two hardware platforms.

The control circuitry 11a, 11b may comprise one or more processors, such as a central processing unit (CPU), a graphics processing unit (GPU), microcontroller, or microprocessor. The one or more processors may be configured to execute program code stored in the memory 12a, 12b, in order to carry out various functions and operations of the vehicle 1 in addition to the methods disclosed herein. The processor(s) may be or include any number of hardware components for conducting data or signal processing or for executing computer code stored in the memory 12a, 12b. The memory 12a, 12b optionally includes highspeed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12a, 12b may include database components, object code components, script components, or any other type of information structure for supporting the various activities of the present description.

In the illustrated example, the memory 12a, 12b further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12a, 12b, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11a, 11b may be distributed e.g. such that one or more processors of the control circuitry 11a, 11b is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 5. Moreover, the vehicle 1 may comprise further elements than those shown in Fig. 5. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 5 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1. However, here the sensors of the sensor system are separated into at least two independent clusters of sensors, each of the clusters being associated with a respective hardware platform.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2l or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, 12C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. The system 10 may for example be implemented in the perception module 314 of the ADS 310.

The localization module 312 and/or the perception module 314 may be communicatively connected to the sensor system 320 in order to receive sensory data from the sensor system 320. The localization module 312 and/or the perception module 314 may further transmit control instructions to the sensor system 320. The path planning module 316 and/or the perception module 314 may be realized in accordance with the embodiments disclosed herein.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11a, 11b (associated with the system 10) may be or include any number of hardware components for conducting data or signal processing or for executing computer code stored in memory 12a, 12b. The system 10 has associated memory 12a, 12b, and the memory 12a, 12b may be one or more devices for storing data and/or computer code for completing or facilitating the various methods described in the present description. The memory may include volatile memory or non-volatile memory. The memory 12a, 12b may include database components, object code components, script components, or any other type of information structure for supporting the various activities of the present description. According to an exemplary embodiment, any distributed or local memory device may be utilized with the systems and methods of this description. According to an exemplary embodiment the memory 12a, 12b is communicably connected to the processor 11a, 11b (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various receiving, transmitting, encoding, fusing, and generating steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for generating a predictive output for an Automated Driving System of a vehicle, the computer-implemented method comprising:
by one or more processors of a first hardware platform of the vehicle:
encoding (S103) a first sensor dataset generated by a first cluster of sensors of the vehicle using one or more first encoder layers in order to form an encoded first sensor dataset;
by one or more processors of a second hardware platform of the vehicle:
encoding (S104) a second sensor dataset generated by a second cluster of sensors of the vehicle using one or more second encoder layers in order to form an encoded second sensor dataset;
wherein the first and second hardware platforms are separate hardware platforms and wherein each sensor of the first cluster of sensors is different from the sensors of the second cluster of sensors;
the computer implemented method further comprising:
by one or more processors of the first hardware platform or by one or more processors of the second hardware platform of the vehicle:
fusing (S107) at least a portion of the encoded first sensor dataset and at least a portion of the encoded second sensor dataset using one or more sensor fusion layers in order to form a set of fused encoded sensor data features;
generating (S108) a predictive output based on the set of fused encoded sensor data features using one or more decoder layers;
wherein the one or more first encoder layers, the one or more second encoder layers, the one or more sensor fusion layers, and the one or more decoder layers together form an end-to-end trained neural network.

2. The computer-implemented method (S100) according to claim 1, further comprising:
by one or more processors of the first hardware platform or by one or more processors of the second hardware platform of the vehicle:
transmitting (S109) the generated predictive output to one or more downstream functions of the Automated Driving System configured to control the vehicle based on the generated predictive output.

3. The computer-implemented method (S100) according to claim 1 or 2, wherein the one or more sensor fusion layers is one or more stage-two sensor fusion layers and wherein the set of fused encoded sensor data features is a set of stage-two fused encoded sensor data features, the computer-implemented method further comprising:
by one or more processors of the first hardware platform of the vehicle:
fusing (S105) at least a portion of the encoded first sensor dataset using one or more first stage-one sensor fusion layers in order to form a first set of fused encoded sensor data features;
by one or more processors of the second hardware platform of the vehicle:
fusing (S106) at least a portion of the encoded second sensor dataset using one or more second stage-one sensor fusion layers in order to form a second set of fused encoded sensor data features;
wherein fusing (S107) at least a portion of the encoded first sensor dataset and at least a portion of the encoded second sensor dataset comprises fusing the first set of fused encoded sensor data features and the second set of fused encoded sensor data features using the one or more stage-two sensor fusion layers in order to form the set of stage-two fused encoded sensor data features;
wherein the one or more first encoder layers, the one or more second encoder layers, the one or more first stage-one sensor fusion layers, the one or more second stage-one sensor fusion layers, the one or more stage-two sensor fusion layers, and the one or more decoder layers together form the end-to-end trained neural network.

4. The computer-implemented method according to claim 3, wherein the one or more decoder layers are one or more stage-two decoder layers, the computer-implemented method further comprising:
in response to the first hardware platform being operational and the second hardware platform being non-operational:
by one or more processors of the first hardware platform of the vehicle:
generating (S110) the predictive output based on the first set of fused encoded sensor data features using one or more first stage-one decoder layers;
in response to the first hardware platform being non-operational and the second hardware platform being operational:
by one or more processors of the second hardware platform of the vehicle:
generating (5111) the predictive output based on the second set of fused encoded sensor data features using one or more second stage-one decoder layers;
wherein the one or more first encoder layers, the one or more second encoder layers, the one or more first stage-one sensor fusion layers, the one or more second stage-one sensor fusion layers, the one or more stage-two sensor fusion layers, the one or more first stage-one decoder layers, the one or more second stage-one decoder layers, and the one or more stage-two decoder layers together form the end-to-end trained neural network.

5. The computer-implemented method (S100) according to any one of claims 1-4, wherein the first cluster of sensors comprises sensors of different modalities and wherein the second cluster of sensors comprises sensors of different modalities.

6. The computer-implemented method (S100) according to any one of claims 1-5, wherein the end-to-end trained neural network is a single end-to-end trained neural network.

7. A computer program product comprising instructions which, when the program is executed by a computing device of a vehicle, causes the computing device to carry out the computer-implemented method (S100) according to any one of claims 1-6.

8. A computer-readable storage medium comprising instructions which, when executed by a computing device of a vehicle, causes the computing device to carry out the computer-implemented method (S100) according to any one of claims 1-6.

9. A system (10) for generating predictive output for an Automated Driving System (310) of a vehicle (1), the system comprising:
a first hardware platform (210) comprising a first cluster of sensors (324a) and one or more processors (11a) configured to:
encode a first sensor dataset generated by the first cluster of sensors of the vehicle using one or more first encoder layers (201a) in order to form an encoded first sensor dataset;
a second hardware platform (211) comprising a second cluster of sensors (324b) and one or more processors (11b) configured to:
encode a second sensor dataset generated by the second cluster of sensors of the vehicle using one or more second encoder layers (201b) in order to form an encoded second sensor dataset;
wherein the first and second hardware platforms are separate hardware platforms and wherein each sensor of the first cluster of sensors (324a) is different from the sensors of the second cluster of sensors (324b);
the one or more processors (11a) of the first hardware platform (210) or the one or more processors (11b) of the second hardware platform (211) being further configured to:
fuse at least a portion of the encoded first sensor dataset and at least a portion of the encoded second sensor dataset using one or more sensor fusion layers (206) in order to form a set of fused encoded sensor data features;
generate a predictive output based on the set of fused encoded sensor data features using one or more decoder layers;
wherein the one or more first encoder layers (201a), the one or more second encoder layers (201b), the one or more sensor fusion layers (206), and the one or more decoder layers (203a, 203b, 203c) together form an end-to-end trained neural network.

10. The system (10) according to claim 9, wherein the one or more processors (11a) of the first hardware platform or the one or more processors (11b) of the second hardware platform of the vehicle is/are further configured to:
transmit the generated predictive output to one or more downstream functions of the Automated Driving System (310) configured to control the vehicle based on the generated predictive output.

11. The system (10) according to claim 9 or 10, wherein the one or more sensor fusion layers is one or more stage-two sensor fusion layers (206) and wherein the set of fused encoded sensor data features is a set of stage-two fused encoded sensor data features;
wherein the one or more processors (11a) of the first hardware platform (210) is/are further configured to:
fuse at least a portion of the encoded first sensor dataset using one or more first stage-one sensor fusion layers (202a) in order to form a first set of fused encoded sensor data features;
wherein the one or more processors (11b) of the second hardware platform (211) is/are further configured to:
fuse at least a portion of the encoded second sensor dataset using one or more second stage-one sensor fusion layers (202b) in order to form a second set of fused encoded sensor data features;
wherein the fusing of at least a portion of the encoded first sensor dataset and at least a portion of the encoded second sensor dataset comprises fusing the first set of fused encoded sensor data features and the second set of fused encoded sensor data features using the one or more stage-two sensor fusion layers (206) in order to form the set of stage-two fused encoded sensor data features;
wherein the one or more first encoder layers (201a), the one or more second encoder layers (201b), the one or more first stage-one sensor fusion layers (202a), the one or more second stage-one sensor fusion layers (202b), the one or more stage-two sensor fusion layers (206), and the one or more decoder layers (203a, 203b, 203c) together form the end-to-end trained neural network.

12. The system (10) according to claim 11, wherein the one or more decoder layers are one or more stage-two decoder layers;
wherein the one or more processors (11a) of the first hardware platform (210) is/are further configured to, in response to the first hardware platform being operational and the second hardware platform being non-operational, generate the predictive output based on the first set of fused encoded sensor data features using one or more first stage-one decoder layers;
wherein the one or more processors (11b) of the second hardware platform (211) is/are further configured to, in response to the first hardware platform being non-operational and the second hardware platform being operational, generate the predictive output based on the second set of fused encoded sensor data features using one or more second stage-one decoder layers;
wherein the one or more first encoder layers (201a), the one or more second encoder layers (201b), the one or more first stage-one sensor fusion layers (202a), the one or more second stage-one sensor fusion layers (202b), the one or more stage-two sensor fusion layers (206), the one or more first stage-one decoder layers, the one or more second stage-one decoder layers, and the one or more stage-two decoder layers together form the end-to-end trained neural network.

13. The system (10) according to any one of claims 9-12, wherein the first cluster of sensors (324a) comprises sensors of different modalities and wherein the second cluster of sensors (324b) comprises sensors of different modalities.

14. The system (10) according to any one of claims 9-13, wherein the end-to-end trained neural network is a single end-to-end trained neural network.

15. A vehicle (1) comprising a system (10) comprising:
a first hardware platform (210) comprising a first cluster of sensors (324a) and one or more processors (11a) configured to:
encode a first sensor dataset generated by the first cluster of sensors of the vehicle using one or more first encoder layers (201a) in order to form an encoded first sensor dataset;
a second hardware platform (211) comprising a second cluster of sensors (324b) and one or more processors (11b) configured to:
encode a second sensor dataset generated by the second cluster of sensors of the vehicle using one or more second encoder layers (201b) in order to form an encoded second sensor dataset;
wherein the first and second hardware platforms are separate hardware platforms and wherein each sensor of the first cluster of sensors (324a) is different from the sensors of the second cluster of sensors (324b);
the one or more processors (11a) of the first hardware platform (210) or the one or more processors (11b) of the second hardware platform (211) being further configured to:
fuse at least a portion of the encoded first sensor dataset and at least a portion of the encoded second sensor dataset using one or more sensor fusion layers (206) in order to form a set of fused encoded sensor data features;
generate a predictive output based on the set of fused encoded sensor data features using one or more decoder layers;
wherein the one or more first encoder layers (201a), the one or more second encoder layers (201b), the one or more sensor fusion layers (206), and the one or more decoder layers (203a, 203b) together form an end-to-end trained neural network.
